# FASCICULE DE BREVET EUROPEEN

(11) **EP 4 448 305 B1**
(45) Date de publication et mention de la délivrance du brevet: **25.11.2026**
(21) Numéro de dépôt: 22835288.6
(22) Date de dépôt: 09.12.2022
(51) Int. Cl.: B60C 9/18, B60C 11/01, B60C 11/03, B60C 1/00, B60C 9/20

(54) **PNEUMATIQUE POUR VÉHICULE LOURD DE GÉNIE CIVIL AVEC UN SOMMET À ÉCHAUFFEMENT RÉDUIT**
REIFEN FÜR EIN SCHWERFAHRZEUG FÜR DEN TIEFBAU MIT REDUZIERTER GÜRTELERWÄRMUNG
TIRE FOR A CIVIL ENGINEERING HEAVY VEHICLE WITH REDUCED CROWN HEATING

(30) Priorité: 14.12.2021 FR 2113428
(43) Date de publication de la demande: 23.10.2024
(73) Titulaire: COMPAGNIE GENERALE DES ETABLISSEMENTS MICHELIN, 63000 Clermont-Ferrand (FR)
(72) Inventeur: SPINNLER, Olivier, 63040 CLERMONT-FERRAND CEDEX 09 (FR); ROYER, Thierry, 63040 CLERMONT-FERRAND CEDEX 09 (FR); BELLIDO-VERA, Natalia, 63040 CLERMONT-FERRAND CEDEX 09 (FR); CUSCITO, Olivia, 63040 CLERMONT-FERRAND CEDEX 09 (FR)
(74) Mandataire: M.F.P. Michelin
(86) Numéro de dépôt international: PCT/EP2022/085118
(87) Numéro de publication internationale: WO 2023/110659

(56) Documents cités:
- WO-A1-2004/085175
- WO-A1-2018/096259
- WO-A1-2021/005301
- JP-A- 2004 009 886

## Description

La présente invention a pour objet un pneumatique pour véhicule lourd de génie civil, destiné à porter de lourdes charges et à rouler sur des sols irréguliers et caillouteux tels que ceux des mines. Cette invention concerne plus particulièrement la portion sommitale du pneumatique constituée par une bande de roulement et un sommet.

Par définition, la direction circonférentielle ou longitudinale est la direction de rotation du pneumatique, la direction axiale ou transversale est la direction parallèle à l'axe de rotation du pneumatique et la direction radiale est une direction perpendiculaire à l'axe de rotation du pneumatique.

La bande de roulement d'un pneumatique constitue la portion périphérique du pneumatique et est destinée à être usée lors de son entrée en contact avec un sol par l'intermédiaire d'une surface de roulement. Elle comprend au moins un matériau à base d'élastomère généralement obtenu par mélangeage d'un ensemble de composants et appelé usuellement mélange élastomérique. Elle comprend généralement un système de découpures séparant des éléments en relief, appelé sculpture, destiné à garantir une performance satisfaisante en adhérence longitudinale, sous couple moteur et sous couple freineur, ainsi qu'en adhérence transversale.

Le sommet est la portion de pneumatique assurant le support radialement intérieur de la bande de roulement et a pour fonction de transmettre les efforts de roulage exercés sur le pneumatique entre la bande de roulement et l'armature de carcasse radiale du pneumatique. Il est constitué par un empilement radial de couches de mélanges élastomériques et de couches de renforcement comprenant des renforts le plus souvent métalliques enrobés dans des mélanges.

La portion sommitale du pneumatique constituée par la bande de roulement et le sommet est prolongée radialement vers l'intérieur, à chacune de ses extrémités axiales, par un flanc relié à un bourrelet, destiné à assurer la liaison du pneumatique avec une jante de montage.

Un problème récurrent des pneumatiques pour véhicule lourd de génie civil est une élévation importante de la température interne du sommet, en raison des conditions de roulage particulièrement sévères : charges élevées, vitesses soutenues, parcours en pente et virageux, sols irréguliers et caillouteux. Ce niveau thermique élevé est dû, d'une part à la forte épaisseur de la bande de roulement surmontant le sommet, typiquement au moins égale à 60 mm, et d'autre part à la forte dissipation thermique des mélanges élastomériques présents à l'intérieur du sommet, appelés usuellement mélanges élastomériques internes. Une élévation de température interne excessive peut provoquer une dégradation prématurée des constituants du sommet, et la mise au déchet du pneumatique.

Il est connu que les mélanges élastomériques qui comprennent, parmi leurs charges de renforcement, de la silice ont une hystérèse, c'est-à-dire une dissipation thermique, diminuée par rapport aux mélanges élastomériques comprenant majoritairement, parmi leurs charges de renforcement, du noir de carbone, comme le décrit, par exemple, le document FR 9901766 : ce qui permet de diminuer la chaleur générée dans le mélange élastomérique concerné, en usage.

Il est également connu que, corrélativement, les mélanges élastomériques comprenant majoritairement de la silice, par exemple à un taux au moins égal à 30 pce (parties pour cent d'élastomère, en masse), ont une conductivité thermique plus faible que les mélanges élastomériques comprenant du noir de carbone, par exemple à un taux au moins égal à 30 pce : ce qui, en fabrication, lors de l'étape de cuisson du pneumatique, augmente significativement le temps de cuisson nécessaire pour atteindre le niveau de vulcanisation souhaité du mélange élastomérique. Cette augmentation du temps de cuisson est particulièrement significative pour un pneumatique de génie civil, caractérisé par des dimensions importantes, et, en particulier, par des épaisseurs de bande de roulement et de sommet élevées. Par conséquent, l'utilisation de mélanges élastomériques internes chargés, au moins en partie, à la silice, dans un pneumatique de génie civil, est a priori pénalisante du point de vue du temps de cuisson du pneumatique, et donc de la productivité de la fabrication. Des pneumatiques connus sont divulgués dans les documents WO 2021/005301 A, WO 2018/096259 A, JP 2004 009886 A et WO 2004/085175 A.

Les inventeurs se sont donnés pour objectif de diminuer la température du sommet d'un pneumatique plus particulièrement destiné à équiper un véhicule lourd de génie civil, dont le sommet comprend au moins un mélange élastomérique interne comprenant, parmi ses charges de renforcement, de la silice, sans pénaliser la productivité de la fabrication du pneumatique, lors de l'étape de cuisson.

Cet objectif a été atteint par un pneumatique pour un véhicule lourd de génie comprenant une bande de roulement, destinée à entrer en contact avec un sol par l'intermédiaire d'une surface de roulement, et un sommet, radialement intérieur à la bande de roulement et radialement extérieur à une armature de carcasse :
- la bande de roulement ayant une hauteur H, mesurée perpendiculairement à la surface de roulement, et ayant une largeur axiale W, mesurée selon une direction axiale, parallèle à l'axe de rotation du pneumatique, sur la surface de roulement et entre deux extrémités axiales prolongées respectivement radialement vers l'intérieur par un bord latéral,
- le sommet étant constitué, selon une direction radiale perpendiculaire à l'axe de rotation du pneumatique, par un empilement radial d'au moins une couche de mélange élastomérique et d'au moins une couche de renforcement,
- au moins une couche de mélange élastomérique, dite à basse hystérèse, comprenant au moins un élastomère et des charges de renforcement constituées par de la silice à un taux TSi, et par du noir de carbone à un taux TN, le taux de charge global TG étant égal à TSi+TN,
- le taux de charge global TG étant au moins égal à 30 pce (parties pour cent parties d'élastomère en masse) et le taux de silice TSi étant au moins égal à 50% du taux de charge global TG,
- la bande de roulement comprenant, au voisinage d'au moins une extrémité axiale, une pluralité de cavités sommitales, réparties selon une direction circonférentielle, ou une pluralité de cavités latérales, réparties selon la direction circonférentielle :
   - une cavité sommitale de la pluralité de cavités sommitales, s'étendant vers l'intérieur de la bande de roulement, à partir de la surface de roulement jusqu'à un fond de cavité sommitale, sur une profondeur PS, telle que PS/H est au moins égal à AS+KS*RSi, avec AS = 0.35, KS= 0.4 et RSi=TSi/TG,
   - une cavité latérale de la pluralité de cavités latérales, s'étendant, vers l'intérieur de la bande de roulement, à partir d'un bord latéral jusqu'à un fond de cavité latérale, sur une profondeur PF, telle que PF/H est au moins égal à AF+KF*RSi, avec AF = -0.1, KF= 0.3 et RSi=TSi/TG.

L'invention consiste de façon essentielle à positionner, généralement dans les éléments en relief de la sculpture de la bande de roulement appelés blocs, situés aux extrémités axiales de la bande de roulement, au moins une pluralité de cavités s'étendant selon la direction circonférentielle du pneumatique, lesdites cavités s'étendant radialement vers l'intérieur, soit à partir de la surface de roulement, soit à partir d'un bord latéral de la bande de roulement. Par conséquent, une bande de roulement selon l'invention comprend l'une ou l'autre des pluralités de cavités précédemment décrites, ou simultanément les deux types de pluralités de cavités.

Une cavité s'étendant vers l'intérieur de la bande de roulement, à partir de la surface de roulement, est appelée, par convention, « cavité sommitale », et est, en particulier, caractérisée par sa profondeur PS. Les cavités sommitales de ladite pluralité de cavités sommitales ne sont pas nécessairement identiques et ne sont pas nécessairement réparties circonférentiellement à intervalles réguliers. Une cavité sommitale s'étend généralement à l'intérieur d'un élément en relief de la bande de roulement, et non dans une découpure séparant deux éléments en relief consécutifs.

Une cavité s'étendant vers l'intérieur de la bande de roulement, à partir d'un bord latéral de la bande de roulement, est appelée, par convention, « cavité latérale », et est, en particulier, caractérisée par sa profondeur PF. Les cavités latérales de ladite pluralité de cavités latérales ne sont pas nécessairement identiques et ne sont pas nécessairement réparties circonférentiellement à intervalles réguliers.

Selon l'invention, les profondeurs respectives PS ou PF de l'un ou l'autre de ces types de cavités respectivement sommitales et latérales, exprimées en valeurs relatives de la hauteur H de bande de roulement, varient linéairement en fonction du ratio RSi, obtenu en divisant le taux de silice TSi par le taux de charge global TG, ces taux de charge étant relatifs au mélange élastomérique à basse hystérèse de la couche de sommet la plus proche du fond de ladite cavité. Cette couche de sommet, constituée par un mélange élastomérique à basse hystérèse, est désignée, dans la suite, par l'appellation « couche à basse hystérèse ».

En roulage, la présence d'une telle cavité crée une zone d'échange thermique à proximité de la couche à basse hystérèse, la plus proche du fond de ladite cavité. Cette couche à basse hystérèse comprend, parmi ses charges renforçantes, de la silice, qui, par rapport à un mélange élastomérique chargé majoritairement en noir de carbone, a une dissipation thermique plus faible, mais une conductivité thermique également plus faible. Ainsi, dans ladite couche à basse hystérèse, même si la production de calories est plus faible, les calories sont plus difficiles à évacuer.

Par conséquent, la proximité de la cavité facilite l'évacuation des calories générées dans ladite couche à basse hystérèse, et donc favorise la diminution de la température dans cette zone d'extrémité axiale de sommet généralement la plus chaude.

Plus le taux de silice dans la couche à basse hystérèse augmente, plus la conductivité thermique de ladite couche à basse hystérèse diminue : ce qui nécessite de positionner la cavité au plus près de ladite couche à basse hystérèse, donc d'augmenter la profondeur de la cavité. La profondeur de la cavité selon l'invention est donc une fonction croissante du taux de silice. De façon équivalente, en raisonnant en valeurs relatives, le rapport de la profondeur de la cavité par la hauteur de la bande de roulement est une fonction croissante du rapport du taux de silice par le taux de charge global.

Un autre avantage important de l'invention est de permettre de diminuer le temps de cuisson du pneumatique. Plus précisément, l'élément de moule permettant le moulage de la cavité précédemment décrite, du fait de sa proximité avec la couche à basse hystérèse, apporte des calories dans ladite couche à basse hystérèse. Cet apport de calories est particulièrement efficace du fait de la conductivité thermique élevée dudit élément de moule généralement métallique. Ainsi, le temps de cuisson par vulcanisation est diminué.

Lorsque la bande de roulement comprend une pluralité de cavités sommitales, la profondeur PS d'une cavité sommitale est avantageusement au plus égale à la hauteur H de la bande de roulement. Plus la profondeur PS d'une cavité sommitale est élevée, plus la distance du fond de cavité sommitale à la couche à basse hystérèse est faible. Cette diminution locale d'épaisseur de matière, entre le fond de cavité sommitale et la couche à basse hystérèse, diminue la protection du sommet, et augmente son risque d'endommagement, à la suite d'une agression de la bande de roulement : d'où la nécessité d'avoir une borne supérieure de la profondeur PS. En outre, si le matériau intercalaire résiduel entre le fond de cavité sommitale et la couche à basse hystérèse est faiblement chargé en silice, celui est alors plus conducteur que la couche à basse hystérèse et favorise l'évacuation des calories.

Également avantageusement, le fond de cavité sommitale est positionné à une distance DS de la couche de mélange élastomérique à basse hystérèse la plus radialement extérieure au plus égale à 1.5 fois la hauteur H de la bande de roulement. Cette caractéristique est corrélée à la profondeur minimale PS de la cavité sommitale et présente les mêmes avantages techniques de gain thermique en roulage et de gain en temps de cuisson du pneumatique, précédemment décrits.

Encore avantageusement, le fond de cavité sommitale est positionné à une distance DS de la couche de mélange élastomérique à basse hystérèse la plus radialement extérieure au moins égale à 5 mm. Cette caractéristique est corrélée à la profondeur maximale PS de la cavité sommitale et présente les mêmes avantages techniques de limitation du risque d'endommagement du sommet, et de contribution à l'évacuation des calories, précédemment décrits.

Le fond de cavité sommitale a un centre avantageusement positionné, à partir de l'extrémité axiale la plus proche, à une distance LS au plus égale à 0.25 fois la largeur axiale W de la bande de roulement. Une extrémité axiale de bande de roulement correspond généralement à la zone la plus épaisse du sommet, donc à la zone dans laquelle il est le plus difficile d'évacuer les calories. C'est également dans cette zone que se situent les couches de découplage des différentes couches de renforcement de sommet, le plus souvent constituées par une épaisseur relativement élevée d'un mélange élastomérique à basse hystérèse, donc faiblement conducteur thermiquement. Une cavité sommitale trop éloignée d'une extrémité axiale de bande de roulement serait par conséquent inefficace vis-à-vis de l'évacuation des calories.

Le fond de cavité sommitale a un centre encore avantageusement positionné, à partir de l'extrémité axiale la plus proche, à une distance LS au moins égale à 0.03 fois la largeur axiale W de la bande de roulement. Une cavité sommitale trop proche d'une extrémité axiale de bande de roulement crée une fragilité, en augmentant le risque d'arrachement du bord de la bande de roulement en cas d'agression.

Préférentiellement la pluralité de cavités sommitales est répartie, selon la direction circonférentielle, avec un pas constant. Une répartition régulière des cavités sommitales permet de garantir des échanges thermiques régulièrement répartis sur toute la circonférence du pneumatique. Le pas constant correspond le plus souvent, mais pas obligatoirement, à la distance entre les centres respectifs de deux éléments en relief du bord de bande de roulement consécutifs.

Lorsque la bande de roulement comprend une pluralité de cavités latérales, la profondeur PF d'une cavité latérale est avantageusement au plus égale à 50 mm. Comme pour une cavité sommitale, plus la profondeur PF d'une cavité latérale est élevée, plus la distance du fond de cavité latérale à la couche à basse hystérèse est faible. Cette diminution locale d'épaisseur de matière, entre le fond de cavité latérale et la couche à basse hystérèse, diminue la protection du sommet, et augmente son risque d'endommagement, à la suite d'une agression du flanc : d'où la nécessité d'avoir une borne supérieure de la profondeur PF. En outre, si le matériau intercalaire résiduel entre le fond de cavité latérale et la couche à basse hystérèse est faiblement chargé en silice, celui est alors plus conducteur que la couche à basse hystérèse et favorise l'évacuation des calories.

Également avantageusement, le fond de cavité latérale est positionné à une distance DF de la couche de mélange élastomérique à basse hystérèse la plus axialement extérieure au plus égale à 1.3 fois la hauteur H de la bande de roulement. Cette caractéristique est corrélée à la profondeur minimale PF de la cavité latérale et présente les mêmes avantages techniques de gain thermique en roulage et de gain en temps de cuisson du pneumatique, précédemment décrits.

Encore avantageusement, le fond de cavité latérale est positionné à une distance DF de la couche de mélange élastomérique à basse hystérèse la plus axialement extérieure au moins égale à 5 mm. Cette caractéristique est corrélée à la profondeur maximale PF de la cavité et présente les mêmes avantages techniques de limitation du risque d'endommagement du sommet, et de contribution à l'évacuation des calories, précédemment décrits.

Le fond de cavité latérale a un centre avantageusement positionné, à partir de l'extrémité axiale la plus proche, à une distance LF au plus égale à 3 fois la hauteur H de la bande de roulement. Une extrémité axiale de bande de roulement correspond généralement à la zone la plus épaisse du sommet, donc à la zone dans laquelle il est le plus difficile d'évacuer les calories. C'est également dans cette zone que se situent les couches de découplage des différentes couches de renforcement de sommet, le plus souvent constituées par une épaisseur relativement élevée d'un mélange élastomérique à basse hystérèse, donc faiblement conducteur thermiquement. Une cavité latérale trop éloignée d'une extrémité axiale de bande de roulement serait par conséquent inefficace vis-à-vis de l'évacuation des calories.

Le fond de cavité latérale a un centre encore avantageusement positionné, à partir de l'extrémité axiale la plus proche, à une distance LF au moins égale à la hauteur H de la bande de roulement. Une cavité latérale trop proche d'une extrémité axiale de bande de roulement crée une fragilité, en augmentant le risque d'arrachement du bord de la bande de roulement en cas d'agression.

Préférentiellement la pluralité de cavités latérales est répartie, selon la direction circonférentielle, avec un pas constant. Une répartition régulière des cavités latérales permet de garantir des échanges thermiques régulièrement répartis sur toute la circonférence du pneumatique. Le pas constant correspond le plus souvent, mais pas obligatoirement, à la distance entre les centres respectifs de deux éléments en relief du bord de bande de roulement consécutifs.

Avantageusement le taux de charge global TG de la au moins une couche de mélange élastomérique à basse hystérèse est au plus égal à 50 pce (parties pour cent parties d'élastomère en masse). Un taux de charge global TG plus élevé, avec un taux de silice TSi plus élevé, conduirait à une hystérèse plus élevée, augmentant la quantité de calories générées en roulage, et à une baisse de cohésion du mélange, augmentant son risque de fissuration.

Préférentiellement, le taux de silice TSi de la au moins une couche de mélange élastomérique à basse hystérèse est au moins égal à 70% du taux de charge global TG. Pour un taux de charge global TG donné, un taux de silice TSi de 70% garantit, par rapport à un mélangé élastomérique majoritairement chargé en noir de carbone, un niveau d'hystérèse plus faible avec un module d'élasticité équivalent.

Selon un mode réalisation préféré, la bande de roulement comprend, au voisinage d'au moins une extrémité axiale, une pluralité de cavités sommitales, réparties selon une direction circonférentielle, et une pluralité de cavités latérales, réparties selon la direction circonférentielle. La présence simultanée de deux pluralités de cavités respectivement sommitales et latérales permet de maximiser les échanges thermiques entre le sommet du pneumatique et l'environnement extérieur.

Les caractéristiques de l'invention sont illustrées par les figures 1 à 6 suivantes, schématiques et non représentées à l'échelle :
- Figure 1 : Vue en coupe méridienne d'une portion sommitale d'un pneumatique selon un mode de réalisation préféré de l'invention,
- Figure 2 : Vue en perspective d'une portion sommitale d'un pneumatique selon un mode de réalisation préféré de l'invention,
- Figure 3 : Vue en perspective d'une portion sommitale d'un pneumatique selon un premier mode de réalisation de l'invention,
- Figure 4 : Vue en perspective d'une portion sommitale d'un pneumatique selon un deuxième mode de réalisation de l'invention,
- Figure 5 : Domaine de variation du ratio « profondeur de cavité sommitale PS/profondeur de sculpture H » en fonction du ratio « taux de silice TSi/taux de charge global TG »,
- Figure 6 : Domaine de variation du ratio « profondeur de cavité latérale PF/profondeur de sculpture H » en fonction du ratio « taux de silice TSi/taux de charge global TG ».

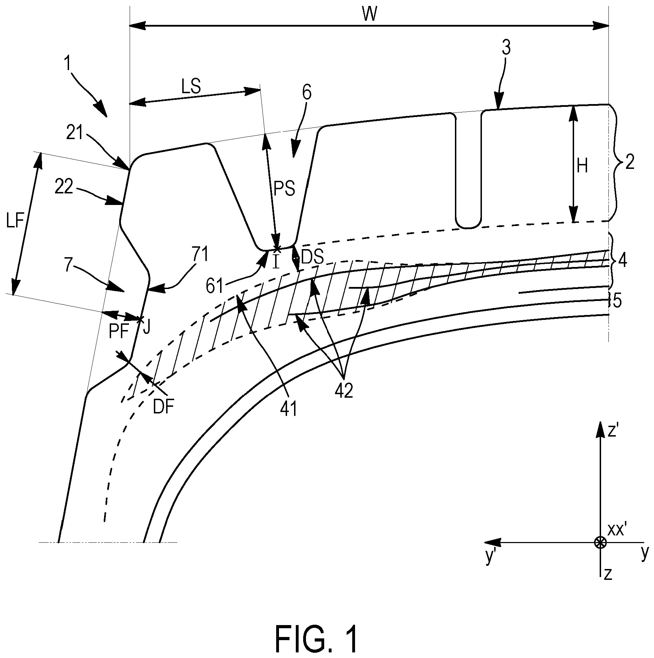

La figure 1 est une vue en coupe méridienne d'une portion sommitale d'un pneumatique selon un mode de réalisation préféré de l'invention, combinant deux pluralités de cavités respectivement sommitales 6 et latérales 7. Le pneumatique 1 comprend une bande de roulement 2, destinée à entrer en contact avec un sol par l'intermédiaire d'une surface de roulement 3, et un sommet 4, radialement intérieur à la bande de roulement 2 et radialement extérieur à une armature de carcasse 5. La bande de roulement 2 a une hauteur H, mesurée perpendiculairement à la surface de roulement 3, et a une largeur axiale W, mesurée selon une direction axiale YY', parallèle à l'axe de rotation du pneumatique, sur la surface de roulement 3 et entre deux extrémités axiales 21 prolongées respectivement radialement vers l'intérieur par un bord latéral 22. Le sommet 4 est constitué, selon une direction radiale ZZ' perpendiculaire à l'axe de rotation du pneumatique, par un empilement radial d'au moins une couche de mélange élastomérique 41 et d'au moins une couche de renforcement 42. Une couche de mélange élastomérique 41, dite à basse hystérèse, représentée par des hachures sur la figure 1, comprend au moins un élastomère et des charges de renforcement constituées par de la silice à un taux TSi, et par du noir de carbone à un taux TN, le taux de charge global TG étant égal à TSi+TN. Le taux de charge global TG est au moins égal à 30 pce (parties pour cent parties d'élastomère en masse) et le taux de silice TSi est au moins égal à 50% du taux de charge global TG. Selon le mode de réalisation préféré de l'invention représenté, la bande de roulement comprend, au voisinage de l'extrémité axiale 21, une pluralité de cavités sommitales 6, réparties selon une direction circonférentielle XX', et une pluralité de cavités latérales 7, réparties selon la direction circonférentielle XX'. Dans le plan méridien YZ de la figure 1, la cavité sommitale 6 de la pluralité de cavités sommitales s'étend vers l'intérieur de la bande de roulement 2, à partir de la surface de roulement 3 jusqu'à un fond de cavité sommitale 61, sur une profondeur PS, telle que PS/H est au moins égal à AS+KS*RSi, avec AS = 0.35, KS= 0.4 et RSi=TSi/TG. La cavité latérale 7 de la pluralité de cavités latérales, s'étend, vers l'intérieur de la bande de roulement 2, à partir d'un bord latéral 22 jusqu'à un fond de cavité latérale 71, sur une profondeur PF, telle que PF/H est au moins égal à AF+KF*RSi, avec AF = -0.1, KF= 0.3 et RSi=TSi/TG. Le fond de cavité sommitale 61 est positionné à une distance DS de la couche de mélange élastomérique 41 à basse hystérèse la plus radialement extérieure et a un centre I positionné, à partir de l'extrémité axiale 21 la plus proche, à une distance LS. Le fond de cavité latérale 7 est positionné à une distance DF de la couche de mélange élastomérique 41 à basse hystérèse la plus axialement extérieure et a un centre J positionné, à partir de l'extrémité axiale 21 la plus proche, à une distance LF.

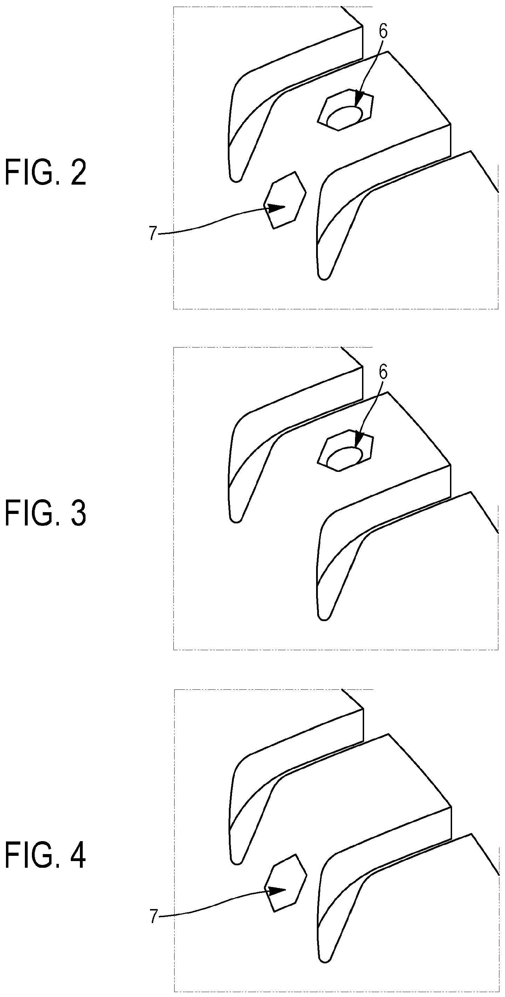

La figure 2 est une vue en perspective d'une portion sommitale d'un pneumatique selon le mode de réalisation préféré de l'invention décrit par la figure 1, avec, au voisinage de chaque extrémité axiale de la bande de roulement, une pluralité de cavités sommitales 6, et une pluralité de cavités latérales 7, toutes deux réparties, selon la direction circonférentielle du pneumatique, avec un pas égal à la distance entre les centres respectifs de deux éléments en relief du bord de bande de roulement consécutifs.

La figure 3 est une vue en perspective d'une portion sommitale d'un pneumatique selon un premier mode de réalisation de l'invention avec, au voisinage de chaque extrémité axiale de la bande de roulement, une pluralité de cavités sommitales 6, répartie, selon la direction circonférentielle du pneumatique, avec un pas égal à la distance entre les centres respectifs de deux éléments en relief du bord de bande de roulement consécutifs.

La figure 4 est une vue en perspective d'une portion sommitale d'un pneumatique selon un deuxième mode de réalisation de l'invention avec, au voisinage de chaque extrémité axiale de la bande de roulement, une pluralité de cavités latérales 7, répartie, selon la direction circonférentielle du pneumatique, avec un pas égal à la distance entre les centres respectifs de deux éléments en relief du bord de bande de roulement consécutifs.

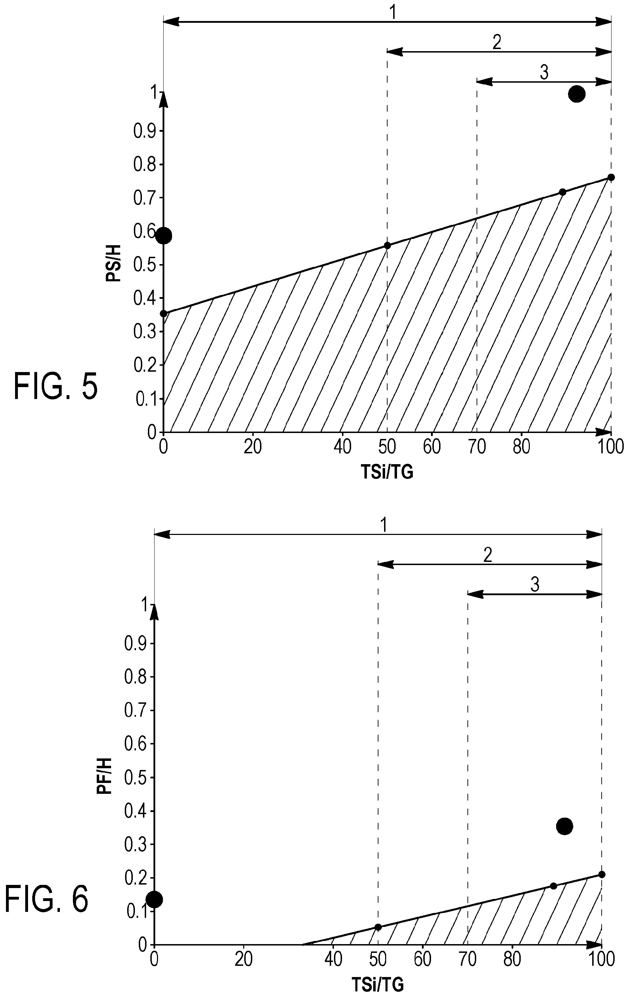

La figure 5 représente le domaine de variation du ratio « profondeur de cavité sommitale PS/profondeur de sculpture H » en fonction du ratio « taux de silice TSi/taux de charge global TG ». Le domaine 1, positionné au-dessus de la partie hachurée, délimitée par la droite PS/H = AS+KS*RSi, avec AS = 0.35, KS= 0.4 et RSi=TSi/TG, est le domaine étudié par les inventeurs, correspondant à un ratio RSi=TSi/TG compris entre 0% et 100%. Le domaine 2 est le domaine de l'invention correspondant à un ratio RSi=TSi/TG au moins égal à 50%. Le domaine 3 est une limitation préférentielle du domaine 2 correspondant à un ratio RSi=TSi/TG au moins égal à 70%.

La figure 6 représente le domaine de variation du ratio « profondeur de cavité latérale PF/profondeur de sculpture H » en fonction du ratio « taux de silice TSi/taux de charge global TG ». Le domaine 1, positionné au-dessus de la partie hachurée, délimitée par la droite PF/H = AF+KF*RSi, avec AF = -0.1, KF= 0.3 et RSi=TSi/TG, est le domaine étudié par les inventeurs, correspondant à un ratio RSi=TSi/TG compris entre 0% et 100%. Le domaine 2 est le domaine de l'invention correspondant à un ratio RSi=TSi/TG au moins égal à 50%. Le domaine 3 est une limitation préférentielle du domaine 2 correspondant à un ratio RSi=TSi/TG au moins égal à 70%.

Une bande de roulement d'un pneumatique selon un mode de réalisation préféré de l'invention, telle que décrit dans les figures 1, 2, 5 et 6, a été étudiée par les inventeurs dans la dimension de pneumatique 50/80 R 57, destinée à équiper un véhicule lourd de génie civil, plus particulièrement un véhicule de type dumper. Un tel pneumatique est destiné à porter une charge égale à 67000 kg, pour une pression de gonflage égale à 6.5 bars.

Le tableau 1 ci-dessous présente les caractéristiques de la bande de roulement selon l'invention I testée, comparées à celles d'une bande de roulement d'un pneumatique de référence R :

**[Tableau 1]**

| **Caractéristiques** | **Référence R** | **Invention I** |
|---|---|---|
| Largeur W de la bande de roulement (mm) | 1030 mm | 1030 mm |
| Hauteur H de bande de roulement (= Profondeur de la découpure la plus profonde) (mm) | 94 mm | 84 mm |
| Profondeur PS de cavité sommitale (mm) | 55 mm | 84 mm |
| Distance DS (entre fond de cavité sommitale et couche de mélange élastomérique à basse hystérèse la plus radialement extérieure) (mm) | - | 18 mm |
| Distance LS (entre centre de fond de cavité sommitale et extrémité axiale de | 125 mm | 95 mm |
| bande de roulement) (mm) | | |
| Profondeur PF de cavité latérale (mm) | 12 mm | 29 mm |
| Distance DF (entre fond de cavité latérale et couche de mélange élastomérique à basse hystérèse la plus radialement extérieure) (mm) | - | 9 mm |
| Distance LF (entre centre de fond de cavité latérale et extrémité axiale de bande de roulement) (mm) | 154 mm | 150 mm |
| Taux de silice TSi (pce) | 0 pce | 40 pce |
| Taux de noir TN (pce) | 41 pce | 3 pce |
| Taux de charge global TG = TSi +TN (pce) | 41 pce | 43 pce |
| Ratio RSi = Taux de silice TSi/ Taux de charge global TG (%) | 0% | 93% |
| Ecart relatif de temps de cuisson à la référence R (%) | Ref | -8.3% |

Le gain en durée de cuisson du pneumatique, en fabrication, est estimé à 8.3%, par rapport au pneumatique de référence, à l'aide d'une simulation numérique permettant de déterminer le niveau de vulcanisation des divers constituants du pneumatique.

Le gain thermique observé en test est de 8°C au point le plus chaud du sommet du pneumatique, par rapport au pneumatique de référence. Cette mesure est réalisée en régime stabilisé, à la vitesse nominale du véhicule, à la pression nominale du pneumatique, et à 0.8 fois la capacité de charge nominale du pneumatique, ces caractéristiques nominales étant les valeurs telles que définies notamment, par exemple, par la norme ISO 4250 et la norme de la « Tire and Rim Association » (Association du Pneumatique et de la Roue) ou « TRA ».

## Revendications

1. Pneumatique (1) pour véhicule lourd de génie civil comprenant une bande de roulement (2), destinée à entrer en contact avec un sol par l'intermédiaire d'une surface de roulement (3), et un sommet (4), radialement intérieur à la bande de roulement (2) et radialement extérieur à une armature de carcasse (5) :
- la bande de roulement (2) ayant une hauteur H, mesurée perpendiculairement à la surface de roulement (3), et ayant une largeur axiale W, mesurée selon une direction axiale (YY'), parallèle à l'axe de rotation du pneumatique, sur la surface de roulement (3) et entre deux extrémités axiales (21) prolongées respectivement radialement vers l'intérieur par un bord latéral (22),
- le sommet (4) étant constitué, selon une direction radiale (ZZ') perpendiculaire à l'axe de rotation du pneumatique, par un empilement radial d'au moins une couche de mélange élastomérique (41) et d'au moins une couche de renforcement (42),
- au moins une couche de mélange élastomérique (41), dite à basse hystérèse, comprenant au moins un élastomère et des charges de renforcement comprenant de la silice à un taux de charge TSi, et du noir de carbone à un taux de charge TN, le taux de charge global TG étant égal à TSi+TN,
- le taux de charge global TG étant au moins égal à 30 pce (parties pour cent parties d'élastomère en masse) et le taux de silice TSi étant au moins égal à 50% du taux de charge global TG,
**caractérisé en ce que** la bande de roulement (2) comprend, au voisinage d'au moins une extrémité axiale (21), une pluralité de cavités sommitales (6), réparties selon une direction circonférentielle (XX'), et/ou une pluralité de cavités latérales (7), réparties selon la direction circonférentielle (XX') :
- une cavité sommitale (6) de la pluralité de cavités sommitales, s'étendant vers l'intérieur de la bande de roulement (2), à partir de la surface de roulement (3) jusqu'à un fond de cavité sommitale (61), sur une profondeur PS, telle que PS/H est au moins égal à AS+KS*RSi, avec AS = 0.35, KS= 0.4 et RSi=TSi/TG,
- une cavité latérale (7) de la pluralité de cavités latérales, s'étendant, vers l'intérieur de 1a bande de roulement (2), à partir d'un bord latéral (22) jusqu'à un fond de cavité latérale (71), sur une profondeur PF, telle que PF/H est au moins égal à AF+KF*RSi, avec AF = -0.1, KF= 0.3 et RSi=TSi/TG.

2. Pneumatique (1) selon la revendication 1, la bande de roulement (2) comprenant une pluralité de cavités sommitales (6), **dans lequel** la profondeur PS d'une cavité sommitale (6) est au plus égale à la hauteur H de la bande de roulement (2).

3. Pneumatique (1) selon la revendication 2, **dans lequel** le fond de cavité sommitale (61) est positionné à une distance DS de la couche de mélange élastomérique (41) à basse hystérèse la plus radialement extérieure au plus égale à 1.5 fois la hauteur H de la bande de roulement (2).

4. Pneumatique (1) selon l'une des revendications 2 ou 3, **dans lequel** le fond de cavité sommitale (61) est positionné à une distance DS de la couche de mélange élastomérique (41) à basse hystérèse la plus radialement extérieure au moins égale à 5 mm.

5. Pneumatique (1) selon l'une quelconque des revendications 2 à 4, **dans lequel** le fond de cavité sommitale (61) a un centre (I) positionné, à partir de l'extrémité axiale (21) la plus proche, à une distance LS au plus égale à 0.25 fois la largeur axiale W de la bande de roulement (2).

6. Pneumatique (1) selon l'une quelconque des revendications 2 à 5, **dans lequel** le fond de cavité sommitale (61) a un centre (I) positionné, à partir de l'extrémité axiale (21) la plus proche, à une distance LS au moins égale à 0.03 fois la largeur axiale W de la bande de roulement (2).

7. Pneumatique (1) selon l'une quelconque des revendications 2 à 6, **dans lequel** la pluralité de cavités sommitales (6) est répartie, selon la direction circonférentielle (XX'), avec un pas constant.

8. Pneumatique (1) selon l'une quelconque des revendications 1 à 7, la bande de roulement (2) comprenant une pluralité de cavités latérales (7), **dans lequel** la profondeur PF d'une cavité latérale (7) est au plus égale à 50 mm.

9. Pneumatique (1) selon la revendication 8, **dans lequel** le fond de cavité latérale (71) est positionné à une distance DF de la couche de mélange élastomérique (41) à basse hystérèse la plus axialement extérieure au plus égale à 1.3 fois la hauteur H de la bande de roulement (2).

10. Pneumatique (1) selon l'une des revendications 8 ou 9, **dans lequel** le fond de cavité latérale (71) est positionné à une distance DF de la couche de mélange élastomérique (41) à basse hystérèse la plus axialement extérieure au moins égale à 5 mm.

11. Pneumatique (1) selon l'une quelconque des revendications 8 à 10, **dans lequel** le fond de cavité latérale (71) a un centre (J) positionné, à partir de l'extrémité axiale (21) la plus proche, à une distance LF au plus égale à 3 fois la hauteur H de la bande de roulement (2).

12. Pneumatique (1) selon l'une quelconque des revendications 8 à 11, **dans lequel** le fond de cavité latérale (71) a un centre (J) positionné, à partir de l'extrémité axiale (21) la plus proche, à une distance LF au moins égale à la hauteur H de la bande de roulement (2).

13. Pneumatique (1) selon l'une quelconque des revendications 8 à 12, **dans lequel la** pluralité de cavités latérales (7) est répartie, selon la direction circonférentielle (XX'), avec un pas constant.

14. Pneumatique (1) selon l'une quelconque des revendications 1 à 13, **dans lequel** le taux de charge global TG de la au moins une couche de mélange élastomérique (41) à basse hystérèse est au plus égal à 50 pce (parties pour cent parties d'élastomère en masse).

15. Pneumatique (1) selon l'une quelconque des revendications 1 à 14, **dans lequel** le taux de silice TSi de la au moins une couche de mélange élastomérique (41) à basse hystérèse est au moins égal à 70% du taux de charge global TG.

## Patentansprüche

1. Reifen (1) für ein schweres Tiefbaufahrzeug, umfassend einen Laufstreifen (2), der dazu bestimmt ist, über eine Lauffläche (3) mit einem Boden in Kontakt zu gelangen, und einen Gürtel (4) radial innerhalb des Laufstreifens (2) und radial außerhalb einer Karkassenverstärkung (5):
- wobei der Laufstreifen (2) eine senkrecht zu der Lauffläche (3) gemessene Höhe H aufweist und eine entlang einer axialen Richtung (YY'), parallel zur Rotationsachse des Reifens, auf der Lauffläche (3) und zwischen zwei axialen Enden (21), die jeweils radial nach innen durch eine Seitenkante (22) verlängert werden, gemessene axiale Breite W aufweist,
- wobei der Gürtel (4) entlang einer radialen Richtung (ZZ') senkrecht zur Rotationsachse des Reifens durch einen radialen Stapel aus mindestens einer Elastomergemisch-Schicht (41) und mindestens einer Verstärkungslage (42) gebildet wird,
- wobei mindestens eine Elastomergemisch-Schicht (41), als mit geringer Hysterese bezeichnet, mindestens ein Elastomer und Verstärkungsfüllstoffe, die Siliciumdioxid mit einem Füllstoffgehalt TSi und Ruß mit einem Füllstoffgehalt TN umfassen, wobei das Gesamtfüllstoffverhältnis TG gleich TSi+TN ist, umfasst,
- wobei der Gesamtfüllstoffgehalt TG mindestens 30 phr (Gewichtsteile pro hundert Gewichtsteile Elastomer) beträgt und der Siliciumdioxidgehalt TSi mindestens 50 % des Gesamtfüllstoffgehalts TG beträgt, **dadurch gekennzeichnet, dass** der Laufstreifen (2) in der Nähe mindestens eines axialen Endes (21) eine Mehrzahl von Scheitelhohlräumen (6), die entlang einer Umfangsrichtung (XX') verteilt sind, und/oder eine Mehrzahl von seitlichen Hohlräumen (7), die entlang der Umfangsrichtung (XX') verteilt sind, umfasst:
- wobei sich ein Scheitelhohlraum (6) der Mehrzahl von Scheitelhohlräumen nach innerhalb des Laufstreifens (2), von der Lauffläche (3) aus bis zu einem Scheitelhohlraumboden (61), über eine Tiefe PS erstreckt, so dass PS/H mindestens AS+KS*RSi ist, mit AS = 0,35, KS = 0,4 und RSi = TSi/TG,
- wobei sich ein seitlicher Hohlraum (7) der Mehrzahl von seitlichen Hohlräumen nach innerhalb des Laufstreifens (2), von einem seitlichen Rand (22) aus bis zu einem Boden des seitlichen Hohlraums (71), über eine Tiefe PF erstreckt, so dass PF/H mindestens AF+KF*RSi ist, mit AF = -0,1, KF = 0,3 und RSi = TSi/TG.

2. Reifen (1) nach Anspruch 1, wobei der Laufstreifen (2) eine Mehrzahl von Scheitelhohlräumen (6) umfasst, wobei die Tiefe PS eines Scheitelhohlraums (6) höchstens gleich der Höhe H des Laufstreifens (2) ist.

3. Reifen (1) nach Anspruch 2, wobei der Scheitelhohlraumboden (61) in einem Abstand DS von der radial äußersten Elastomergemisch-Schicht (41) mit geringer Hysterese von höchstens dem 1,5-Fachen der Höhe H des Laufstreifens (2) angeordnet ist.

4. Reifen (1) nach einem der Ansprüche 2 oder 3, wobei der Scheitelhohlraumboden (61) in einem Abstand DS von der radial äußersten Elastomergemisch-Schicht (41) mit geringer Hysterese von mindestens 5 mm angeordnet ist.

5. Reifen (1) nach einem der Ansprüche 2 bis 4, wobei der Scheitelhohlraumboden (61) ein Zentrum (I) aufweist, das von dem nächstgelegenen axialen Ende (21) aus in einem Abstand LS von höchstens dem 0,25-Fachen der axialen Breite W des Laufstreifens (2) angeordnet ist.

6. Reifen (1) nach einem der Ansprüche 2 bis 5, wobei der Scheitelhohlraumboden (61) ein Zentrum (I) aufweist, das von dem nächstgelegenen axialen Ende (21) aus in einem Abstand LS von mindestens dem 0,03-Fachen der axialen Breite W des Laufstreifens (2) angeordnet ist.

7. Reifen (1) nach einem der Ansprüche 2 bis 6, wobei die Mehrzahl von Scheitelhohlräumen (6) entlang der Umfangsrichtung (XX') mit einer konstanten Schrittweite verteilt ist.

8. Reifen (1) nach einem der Ansprüche 1 bis 7, wobei der Laufstreifen (2) eine Mehrzahl von seitlichen Hohlräumen (7) umfasst, wobei die Tiefe PF eines seitlichen Hohlraums (7) höchstens 50 mm beträgt.

9. Reifen (1) nach Anspruch 8, wobei der Boden des seitlichen Hohlraums (71) in einem Abstand DF von der axial äußersten Elastomergemisch-Schicht (41) mit geringer Hysterese von höchstens dem 1,3-Fachen der Höhe H des Laufstreifens (2) angeordnet ist.

10. Reifen (1) nach einem der Ansprüche 8 oder 9, wobei der Boden des seitlichen Hohlraums (71) in einem Abstand DF von der axial äußersten Elastomergemisch-Schicht (41) mit geringer Hysterese von mindestens 5 mm angeordnet ist.

11. Reifen (1) nach einem der Ansprüche 8 bis 10, wobei der Boden des seitlichen Hohlraums (71) ein Zentrum (J) aufweist, das von dem nächstgelegenen axialen Ende (21) aus in einem Abstand LF von höchstens dem 3-Fachen der Höhe H des Laufstreifens (2) angeordnet ist.

12. Reifen (1) nach einem der Ansprüche 8 bis 11, wobei der Boden des seitlichen Hohlraums (71) ein Zentrum (J) aufweist, das von dem nächstgelegenen axialen Ende (21) aus in einem Abstand LF von mindestens der Höhe H des Laufstreifens (2) angeordnet ist.

13. Reifen (1) nach einem der Ansprüche 8 bis 12, wobei die Mehrzahl von seitlichen Hohlräumen (7) entlang der Umfangsrichtung (XX') mit einer konstanten Schrittweite verteilt ist.

14. Reifen (1) nach einem der Ansprüche 1 bis 13, wobei das Gesamtfüllstoffverhältnis TG der mindestens einen Elastomergemisch-Schicht (41) mit geringer Hysterese höchstens 50 phr (Gewichtsteile pro hundert Gewichtsteile Elastomer) beträgt.

15. Reifen (1) nach einem der Ansprüche 1 bis 14, wobei der Siliciumdioxidgehalt TSi der mindestens einen Elastomergemisch-Schicht (41) mit geringer Hysterese mindestens 70 % des Gesamtfüllstoffgehalts TG beträgt.

## Claims

1. Tyre (1) for a heavy-duty construction plant vehicle, comprising a tread (2), intended to come into contact with the ground via a tread surface (3), and a crown (4), radially on the inside of the tread (2) and radially on the outside of a carcass reinforcement (5):
- the tread (2) having a height H, measured perpendicular to the tread surface (3), and having an axial width W, measured in an axial direction (YY'), parallel to the axis of rotation of the tyre, on the tread surface (3) and between two axial ends (21) each extended radially inwards by a lateral edge (22),
- the crown (4) consisting, in a radial direction (ZZ') perpendicular to the axis of rotation of the tyre, of a radial stack of at least one elastomeric mixture layer (41) and at least one reinforcing layer (42),
- at least one elastomeric mixture layer (41), referred to as low-hysteresis, comprising at least one elastomer and reinforcing fillers comprising silica in a filler content TSi, and carbon black in a filler content TN, the overall filler content TG being equal to TSi+TN,
- the overall filler content TG being at least equal to 30 phr (parts per hundred parts of rubber (elastomer), by weight) and the silica content TSi being at least equal to 50% of the overall filler content TG,
**characterized in that** the tread (2) comprises, in the vicinity of at least one axial end (21), a plurality of crown cavities (6), distributed in a circumferential direction (XX'), and/or a plurality of lateral cavities (7), distributed in the circumferential direction (XX'):
- a crown cavity (6) of the plurality of crown cavities, extending towards the inside of the tread (2), from the tread surface (3) to a crown cavity bottom (61), over a depth PS, such that PS/H is at least equal to AS+KS*RSi, with AS = 0.35, KS= 0.4 and RSi=TSi/TG,
- a lateral cavity (7) of the plurality of lateral cavities, extending towards the inside of the tread (2), from a lateral edge (22) to a lateral cavity bottom (71), over a depth PF, such that PF/H is at least equal to AF+KF*RSi, with AF = -0.1, KF= 0.3 and RSi=TSi/TG.

2. Tyre (1) according to Claim 1, the tread (2) comprising a plurality of crown cavities (6), **wherein** the depth PS of a crown cavity (6) is at most equal to the height H of the tread (2).

3. Tyre (1) according to Claim 2, **wherein** the crown cavity bottom (61) is positioned at a distance DS from the radially outermost low-hysteresis elastomeric mixture layer (41) which is at most equal to 1.5 times the height H of the tread (2).

4. Tyre (1) according to either of Claims 2 and 3, **wherein** the crown cavity bottom (61) is positioned at a distance DS from the radially outermost low-hysteresis elastomeric mixture layer (41) which is at least equal to 5 mm.

5. Tyre (1) according to any one of Claims 2 to 4, **wherein** the crown cavity bottom (61) has a centre (I) that is positioned, from the nearest axial end (21), at a distance LS at most equal to 0.25 times the axial width W of the tread (2).

6. Tyre (1) according to any one of Claims 2 to 5, **wherein** the crown cavity bottom (61) has a centre (I) that is positioned, from the nearest axial end (21), at a distance LS at least equal to 0.03 times the axial width W of the tread (2).

7. Tyre (1) according to any one of Claims 2 to 6, **wherein** the plurality of crown cavities (6) is distributed, in the circumferential direction (XX'), with a constant pitch.

8. Tyre (1) according to any one of Claims 1 to 7, the tread (2) comprising a plurality of lateral cavities (7), **wherein** the depth PF of a lateral cavity (7) is at most equal to 50 mm.

9. Tyre (1) according to Claim 8, **wherein** the lateral cavity bottom (71) is positioned at a distance DF from the axially outermost low-hysteresis elastomeric mixture layer (41) which is at most equal to 1.3 times the height H of the tread (2).

10. Tyre (1) according to either of Claims 8 and 9, **wherein** the lateral cavity bottom (71) is positioned at a distance DF from the axially outermost low-hysteresis elastomeric mixture layer (41) which is at least equal to 5 mm.

11. Tyre (1) according to any one of Claims 8 to 10, **wherein** the lateral cavity bottom (71) has a centre (J) that is positioned, from the nearest axial end (21), at a distance LF at most equal to 3 times the height H of the tread (2).

12. Tyre (1) according to any one of Claims 8 to 11, **wherein** the lateral cavity bottom (71) has a centre (J) that is positioned, from the nearest axial end (21), at a distance LF at least equal to the height H of the tread (2).

13. Tyre (1) according to any one of Claims 8 to 12, **wherein** the plurality of lateral cavities (7) is distributed, in the circumferential direction (XX'), with a constant pitch.

14. Tyre (1) according to any one of Claims 1 to 13, **wherein** the overall filler content TG of the at least one low-hysteresis elastomeric mixture layer (41) is at most equal to 50 phr (parts per hundred parts of rubber (elastomer), by weight).

15. Tyre (1) according to any one of Claims 1 to 14, **wherein** the silica content TSi of the at least one low-hysteresis elastomeric mixture layer (41) is at least equal to 70% of the overall filler content TG.
